# EUROPEAN PATENT APPLICATION

(11) **EP 0 548 034 A2**
(43) Date of publication of application: **23.06.1993**
(21) Application number: 92830680.2
(22) Date of filing: 18.12.1992
(51) Int. Cl.: H04N 7/08, H04H 9/00

(54) **A system for interception and separation of portions of a television signal**

(30) Priority: 19.12.1991 IT RM910958
(71) Applicant: PUBLISOFT s.r.l., I-00161 Rome (IT); La Mesa, Giuseppe, I-00162 Rome (IT)
(72) Inventor: La Mesa, Giuseppe, I-00162 Rome (IT); Serra, Angelo, I-00161 Rome (IT)
(74) Representative: Taliercio, Antonio

(57) **Abstract**

Broad subject-matter of this invention is a system for interception and separation of portions of a television signal aimed at automatic recognition of television transmissions, in particular publicity advertisements, comprising a section for separating or locating the transmissions, as section for acknowledging or recognizing the individual transmission, a section for storing the audio and video parameters of said transmissions and a man-machine interface section. Specific subject-matter of this invention is a separator apparatus comprising the following essential components: a) a base band video signal processing block; b) an audio signal processing block; c) a control and analysis unit; d) and interface section in respect of the video cassette recorder (VCR) and of the parameter extraction section of the acknowledgement apparatus.

## Description

This invention broadly relates to systems for interception and separation of portions of a television signal in order to identify television transmissions and particularly relates to a system aimed at identifying advertisement transmissions for classifying and recording useful information relating thereto, such as the advertised product, the broadcasting station, the date and the transmission time.

As it is known, the transmission survey of publicity advertisements, intended for publication of summarizing reports, is presently carried out by means of combined man-machine activities by which a number of human operators provide for monitoring the television transmissions and for manually noting the resulting video recordings. These activities require that all of the advertisements (the number of which can be estimated up to 60.000 per month in Italy) be identified or acknowledged, coded and timed. It is apparent that such a production line unavoidably has a number of drawbacks from an acknowledgement accuracy view point, both in view of the intrinsic capabilities of the video recorders and as a consequence of human errors, both in the timing phase and in the noting or transcription phase.

Furthermore, the present arrangements have been found to be inadequate also in view of their intrinsic uncapability to rapidly conform to changing situations. In other words, such a labour organization is extremely static and is not capable to adapt itself to an increasing work load, which, in turn, has negative effects upon the timely publication of the above mentioned summarizing reports.

The need exists, therefore, of a system adapted to carry out acknowledgement or recognition of advertisement transmissions in a completely automatic and reliable procedure operating in real time, so as to eliminate all drawbacks connected with employment of human operators.

This broad need is satisfied according to this invention by means of a system comprising the following basic apparatus or functional component sections:
- an apparatus for separation or extraction of programs and particularly of advertisement programs, adapted to locate the initial portion of each new program and to start, at the right time, the apparatus for analyzing and acknowledging the concerned program;
- an acknowledgement apparatus which analyses the images "separated" or "extracted" by the first above mentioned apparatus and, therefore, is capable to determine whether the concerned analysed program belongs to the assembly of all possible publicity advertisements: this apparatus can be considered, in turn, as divided in two sections;
- an audio acknowledgement section, that operates upon audio type information, and
- a video acknowledgement section, that analyses all video information contained in the images.

The above mentioned acknowledgement sections operate by utilizing a Data Base including information relating to already known advertisements to which any information provided by said separator apparatus is compared;
- a system for recording the audio and video parameters of the publicity advertisements as acknowledged: it should be provided with a large storage capability and with a high processing speed, in order that it can be utilized in real time by said acknowledgement apparatus;
- a man-machine interfacing system possibly having a multi-user capability, so as to enable the names of new publicity advertisements not yet included in the library to be defined, even contemporaneously by a plurality of operators.

As far as the individual apparatus are concerned, it should be remarked that, even if this invention broadly relates to a whole system for acknowledgement of publicity advertisements, its specific subject-matter is the separator apparatus which will be hereinbelow detailedly described and specifically claimed.

The separator apparatus acts so as to enable to discriminate between publicity and non-publicity programs and it can also be defined as an (audio and video) segmentator. In fact, since the desired acknowledgement is performed as a result of a comparison operation between the contents of a data base and the received television signal, and since the need to carry out a continuous and ininterrupted comparison work is to be avoided, it provides for segmenting the received signal, thereby enabling a focalized and timed comparison operation to be effected.

The abovesaid data base contains the previously acknowledged and labelled messages stored therein.

The acknowledgement apparatus comprises two functional sections: a section for identifying the parameters and a section for proper and specific acknowledgement. The parameter identification or extraction section, which is not included per sè in the scope of this invention, effectively performs a digital conversion of the received analog television signal based upon a suitable algorithm in order to enable the signals to be displayed in parametric form.

From a functional view point, the separator apparatus exploits an event in the television transmission, in particular the presence of black half frames to divide a transmission from the subsequent one and supplies a signal to indicate the begin of a subsequent transmission and of course the end of a preceding transmission and so doing it starts the acknowledgement apparatus. The acknowledgement apparatus in the first place codes the new transmission into parametric form and, thereafter, compares it to the records stored in its data base. If the new transmission is ascertained to be equal to any of said stored transmissions, it is acknowledged and labeled. Should the comparison turns out to be negative, the new transmission is considered by the apparatus as a publicity advertisement (in fact, regardless of a possible duration threshold, it has no other evaluation criterium available) and, as such, this new transmission is added to the transmissions already stored in the memory, while a human operator will have the job to establish at a later time whether the newly added records are publicity advertisements, and in this case they will be effectively maintained, or they are not, and this case they are eliminated.

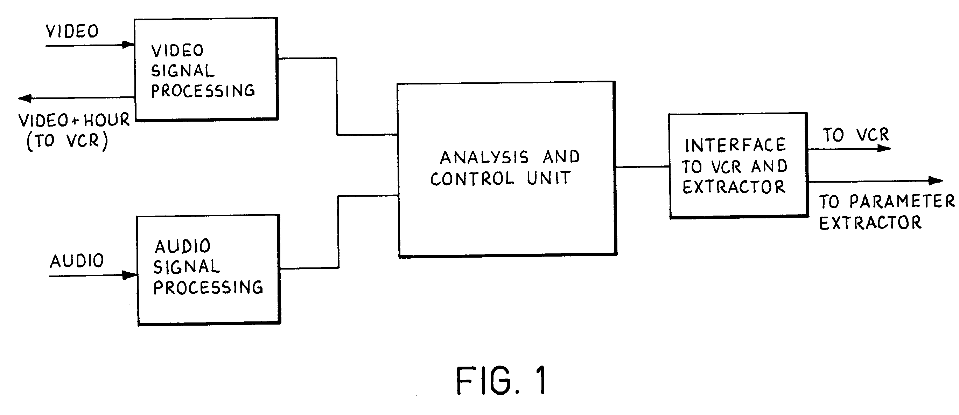

As specific subject-matter of this invention, in its preferred embodiments, there is provided a fragmentator or separator block comprising as essential component sections: a) a base band video signal processing block; b) an audio signal processing block; c) an analysis and control unit; d) an interface unit in respect of a cassette video recorder (CVR) and of the parameter extraction section of the acknowledgement apparatus (Figure 1).

Further details and advantages of this invention will be apparent from the following description, by referring to the annexed drawings wherein the preferred embodiments are disclosed by way of illustration rather than by way of limitation.

In the drawings:
Figure 1 shows a block diagram of a separator apparatus according to this invention, which is included in the comprehensive system for automatic acknowledgement of publicity advertisements;
Figure 2 shows a block diagram of the video signal processing section included in the separator apparatus of Figure 1;
Figure 3 shows a block diagram of the analysis and control section included in the separator apparatus of Figure 1;
Figure 4 show a diagram of the software organization upon which the operation of the separator apparatus is based;
Figures 5, 5a in combination show a flow chart of the main program or task in respect of the separator apparatus menagement;
Figure 6 shows a flow chart relating to the decision algorithm between "white" and "black" half frames;
Figure 7 shows a block diagram of a different embodiment of the video signal processing section included in the separator apparatus of Figure 1;
Figure 8 shows the implementation of the comparator, counter and pixel differentiator block of Figure 7, for punctual analysis of the video signal.

As above mentioned, the separator apparatus is an apparatus that enables to synchronize or, in other words, to timely associate the portions of interest of the video signal, namely the individual transmissions, to the parameter extraction function, by dividing or segmenting it into events defined by a begin (and end) instant and by a duration. It is based upon the realization that the events of interest and namely the individual transmissions, both advertisement and non-advertisement transmissions, are preceded by low power half frames (black half frames) and by almost null audio signal.

By referring to Figure 1, four operative blocks can be structurally located, namely: a) a base band video signal processing block; b) an audio signal processing block; c) an analysis and control unit; and d) an interface unit in respect of the cassette video recorder and in respect to the parameter extraction section, which, as above mentioned, is the first section of the acknowledgement apparatus.

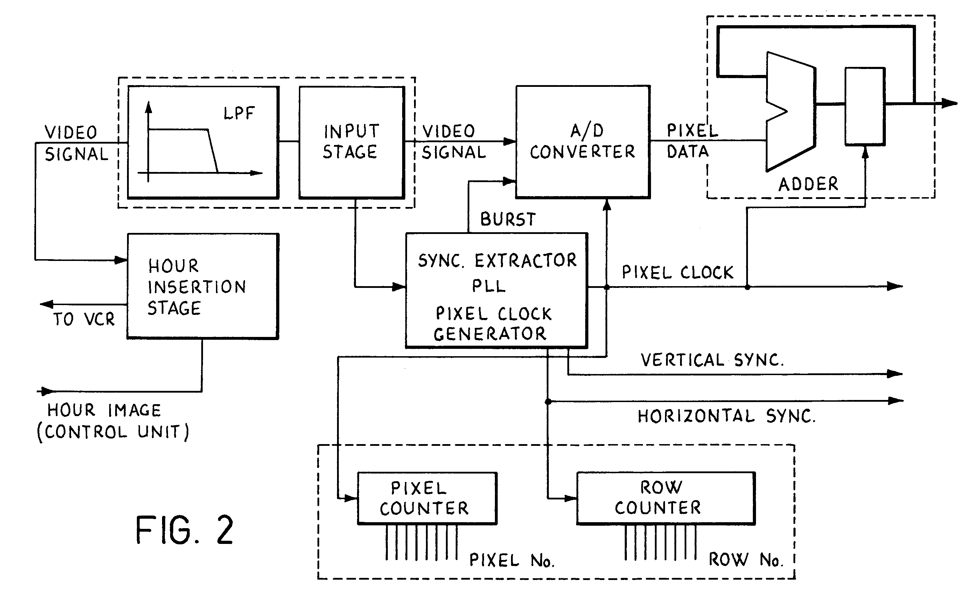

By referring to Figure 2, wherein a more detailed implementation of the video signal processing block is shown, the following component sections can be identified: i) an input stage with associated low pass filter (LPF); ii) a time (hour) insertion stage; iii) a block acting as a synchronization signal extractor, PLL (phase locked loop) circuity and pixel clock rigenerator; iv) an analog/digital converter stage; v) a pixel and line counter; and vi) a line adder.

In particular, it can be observed that the video input signal is applied to the LPF filter and to the time insertion stage. The abovesaid low pass filter LPF and the effective input stage are intended to match both in respect to impedence and in respect to amplitude the video input signal applied to said analog/digital converter circuit A/D. Since the prevailing television standard retires that the luminance signal spectrum be interlaced with the chrominance signal spectrum, the first above mentioned stage provides for suitably attenuating the color or chrominance under-carrier in order to enable only the luminance component to be used. The input stage, therefore, includes also a de-coupling or separator (buffer)amplifier in addition to the LPF filter.

As far as the time insertion stage is concerned, it should be clear that it is a per se known circuit which receives the time (hour) image from said control unit, which will be more detailedly discussed hereinbelow, said time image being added to television signal and subsequently sent to the recording unit VCR.

As far as the PLL synchronization signal extraction block for rigeneration of the pixel clock is concerned, the parameter extraction operation is timely linked to the video signal both in view of the fact that it is clocked by the frame and the line synchronization signals and in view of the fact that these latter signals are utilized for rigeneration of the pixel clock signal.

In fact, the pixel clock signal that is utilized to clock the operation of the adder should be as good as possible and it could be generated by using an independent quartz circuit or it can be extracted by the synchronization signals themselves.

In particular, the frame or vertical synchronization signal acts as a clock signal in respect of the control unit (control and analysis block of Figure 1), that is effectively implemented as a suitable computer, while the line or horizontal synchronization signal acts as a clock signal in respect of the line adder.

A suitable PLL (Phase Locked Loop) circuit, taking the line frequency as a standard reference, generates the pixel clock sampling frequency in respect of the analog/digital converter circuit and in respect of all other functions linked to or dependent on the video signal itself. In particular, it can be observed that the pixel clock signal is coupled to said A/D converter and to said adder circuits.

Of course, as above mentioned, due to its noticeable circuital and calibration complexity, the PLL circuit could also be substituted for instance by a quartz oscillator circuit, as those skilled in the art can easily understand.

Before digitally processing the video signal, already filtered and matched by the input block, but still being in analog form, it is necessary to convert it to digital form.

When the specific characteristics of the television signal are properly considered, in addition, the necessity arises to give a fixed offset as a conversion reference (clamp level). This function is performed by said A/D converter circuit controlled by the burst signal (synchronization signal for the chrominance undercarrier) that is furnished, just as the pixel clock signal, by said synchronization signal extraction circuit.

As far as the pixel and line counters are concerned, they are provided, as shown in Figure 2, in view of the fact that the television standard requires that the first few lines of each half frame be off (black level), so that:
a) one or more initial lines can be taken as a reference for establishment of the black level, and
b) it is neither indispensable nor convenient to analyse a whole half frame, but it is sufficient to analyse the visible portion thereof, because the other concealed portions can be utilized for exploitation of other services, for instance so called televideo services.

The pixel and line counters are connected, the first, to the pixel clock signal output of the synchronization signal extraction, PLL and pixel clock signal rigeneration block and, the latter, to the horizontal synchronization signal output of said block and they are designed to label each line and, within each line, the individual pixels with respect to the synchronization signals, so as to correctly locate the analysis region or so called "ROI" (Region of Interest) region.

The adder or cumulator circuit of Figure 2 receives the pixel data from the A/D converter and adds or cumulates the values of the individual pixels of each line in order to determine the average energy level of the same. The output of the adder circuit is coupled to the control unit, so that the average numerical values calculated in respect of each line are transferred to the control unit in coincidence with the line synchronization signals and are analyzed (added) therein at the end of the half frame and consequently in coincidence with the vertical synchronization signals.

The audio signal processing block broadly shown in Figure 1 has not been more detailedly illustrated because the contents and the operation modes thereof should now be apparent in view of the explanations already furnished in connection with the video signal processing block. For the sake of completeness, however, it should be specified that it is implemented by an active filter acting as band limiter, amplifier and impedance adapter, corresponding to the input stage of Figure 2. An analog/digital converter follows for converting the audio signal levels into digital form, corresponding to the A/D converter of Figure 2. The samples so obtained are transferred and analyzed by the control unit with the same line and frame clock signals of the adder of Figure 2.

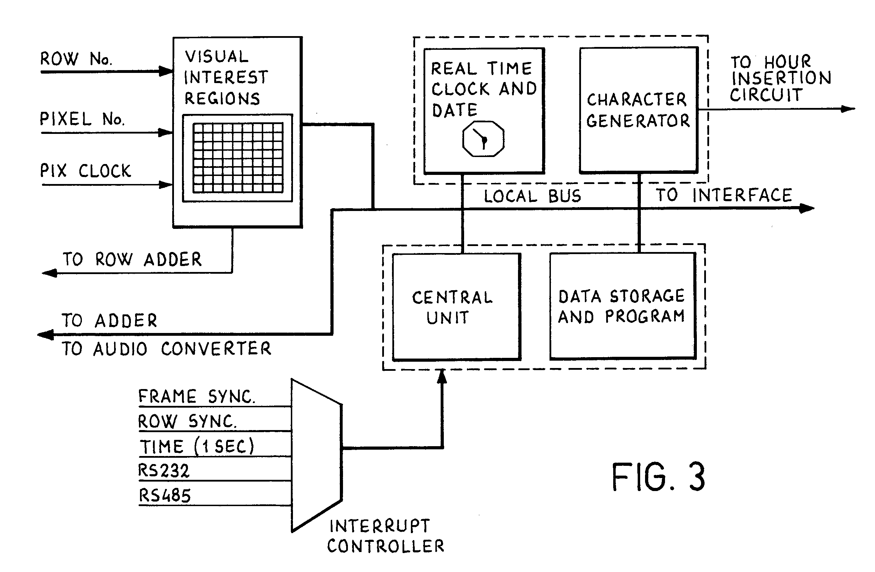

As far as the control and analysis unit is concerned, it is detailedly shown in Figure 3; the following component block can be located:
- a microprocessor central unit with associated data and program memory;
- a real time clock circuit, with day and year indicator and a circuit to generate the time (hour) image;
- a circuit for generating the Regions of Visual Interest and for positioning the time image;
- a circuit for management of the line and frame synchronization signals, of the time information as well as of two serial lines RS232 and RS485, one of which is designed for connection with the computer of the data acquisition system and the other one is designed in order to enable the synchronization of the hour indication.

The "intelligent" section of the apparatus is formed by the CPU central unit which has memory capability and is designed for analyzing the already processed video and audio information, as well as for defining the significant events into which the television transmission is divided. In this operation step, to each event are assigned both a time unique code, that will be maintained during all subsequent processing steps, and a duration value that is measured by counting the number of half frames which the concerned event consists of.

The processing program and its related algorithms are hereinbelow more detailedly described.

A local clock device (Real Time Clock) with date indicating capability, directly managed by the local central unit CPU, is used to generate the time information. Should the necessity arise to modify the hour indication or to synchronise it to the official sources, a "multipoint" network RS485 is exploited in order to guarantee the contemporaneous synchronization of a number of channels, in particular a number of separator apparatus according to this invention. Each clock device can operate both as a master and as a slave member, in view of the fact that it can be used as a "reference" and, by exploiting the same network, it can perform the synchronization function at time intervals established by an external operator.

Besides the clock and calendar block, a further block is provided to perform the function of a character generator to generate the hour image synchronized with the television picture. The output of this block is coupled to the above mentioned hour insertion circuit as shown in Figure 2.

Since, besides the visible signal portions, also a further non-visible information is often present and since it could be convenient and useful to eliminate any fixed symbols from the image (such as the logo of the various television broadcasting stations), it becomes indispensable that different Regions of Visual Interest be programmed according to different broadcasting stations.

By exploiting the line and pixel counters of Figure 2, which therefore furnish the numbers of lines and of pixels, the block that generates the Regions of Visual Interest receives also the pixel clock signal and divides the image into small regions including a few pixels, said regions being activated or not activated by the abovesaid control unit to enable the analysis of the television signal. This operation is effected with the aid of a "map" memory, wherein each bit corresponds to one of these small visual regions. As a matter of fact, by means of this block, it is possible to select a region of the image within which the analysis of the signal can be carried out among a plurality of such regions. Furthermore, the same principle can be taken as a base in order to locate the horizontal band upon which the time information provided by the character generator of Figure 3, including year, month, day, hours, minutes and seconds, respectively will appear overlapped.

By referring still to Figure 3, a particular attention should be paid to the block designed to manage the synchronization signals and the time information (Interrupt Controller), because it establishes the base for the analysis of the signals, by managing microevents, such as the synchronization signals for the television signal (sync of frame, sync of line) and the clock interrupt (time) (at each second). The line (or row) synchronization signal periodically determines reading the line adder of Figure 2 and the correspondent audio converter (not shown); the frame synchronization signal starts the analysis procedure of the half frame; the interrupt of the Real Time Clock causes the hour indication to be up-dated at each second.

Furthermore, the already quoted serial interfaces RS232 and RS485 as well as a watch-dog acting timer are managed in interrupt, said timer being aimed at discriminating all those situations wherein the video signal is absent or weak (lack of carrier), in order to prevent the development of ambiguity situations.

As far as the interface block in respect of the video cassette recorder VCR and of the parameter extraction block as shown in Figure 1 is concerned, it can be appreciated that this block is designated to transmit the compacted information to all channels comprising the whole network. From a structural point of view, this block does not embody particular solutions: the operation is performed in a completely automatic procedure by means of microrelays based upon the external recording unit VCR, wherein the signal is utilized with superposed image of the hour and of the date, as above explained.

The begin- or end-of-event information with associated identification code and duration is supplied to the parameter extraction unit. The begin of event signal is simply and directly transmitted as a on/off contact, whilst the end of event signal is supplied through said serial interface RS232 directly managed by the control and process unit of Figure 3.

A structural description of the apparatus according to this invention has been heretofore provided and some functional and circuital details have been indicated. It should be understood, however, that it has not been considered as convenient giving further details about the contents of the various blocks, in view of the fact that the effective circuit implementations can be designed by any skilled in the art who, based upon the functions to be exploited, can exploit the knowledges of the art and can employ commercial components to put this invention to practice.

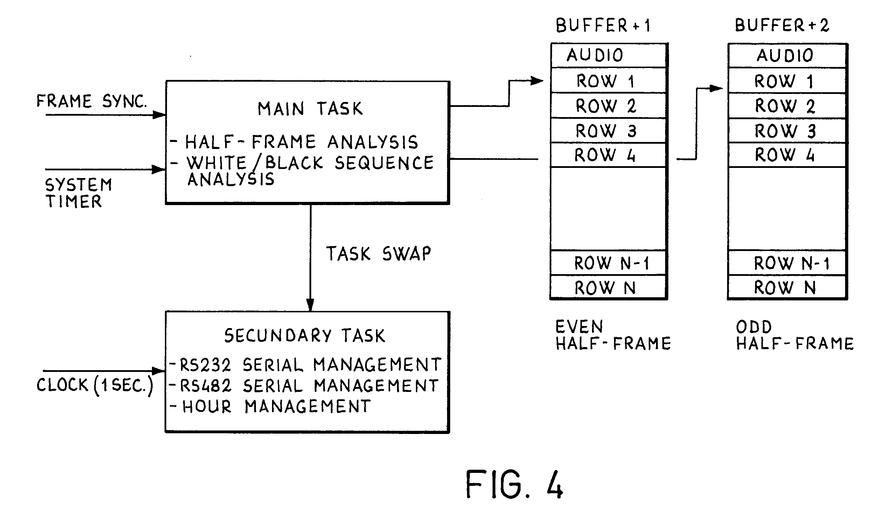

For the sake of completeness and aiming at furnishing some details of the software by which the operation of the whole apparatus and forming per se no part of this invention, reference is now made to Figures 4, 5 and 6 of the annexed drawings.

The management of the separator apparatus, which is specific subject matter of this invention, is carried out by means of two processing tasks or programs. The first program or main program, also considered from a hierarchical order view point, performs the function to carry out a continuous analysis of the video and audio signals, in order to divide them into events (as above mentioned) in view of their subsequent evaluation, while the secundary program performs the function to manage all interface functions in respect of external world (operator, VCR recorder, parameter extractor, time up-dating).

The exchange or swap mechanism between the two programs is activated by the frame synchronization signal or, in lack thereof, by the system timer. As a matter of fact, each frame synchronization signal starts the main program, which processes the audio and video data associated with the half frame which the synchronization signal belongs to. When this operation is over, the secundary program is activated and will remain in active condition during the whole remaining time period up to the subsequent frame interrupt.

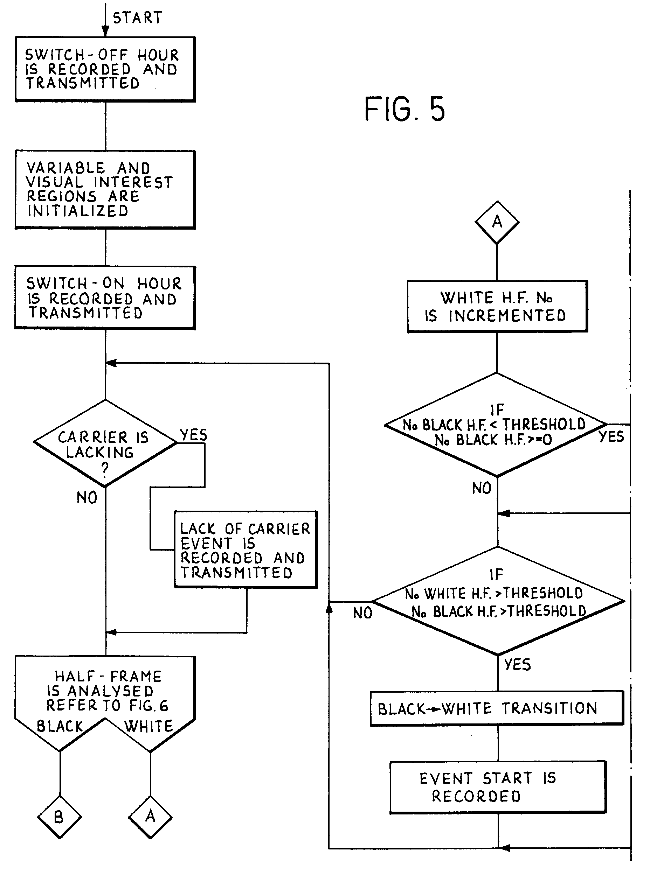

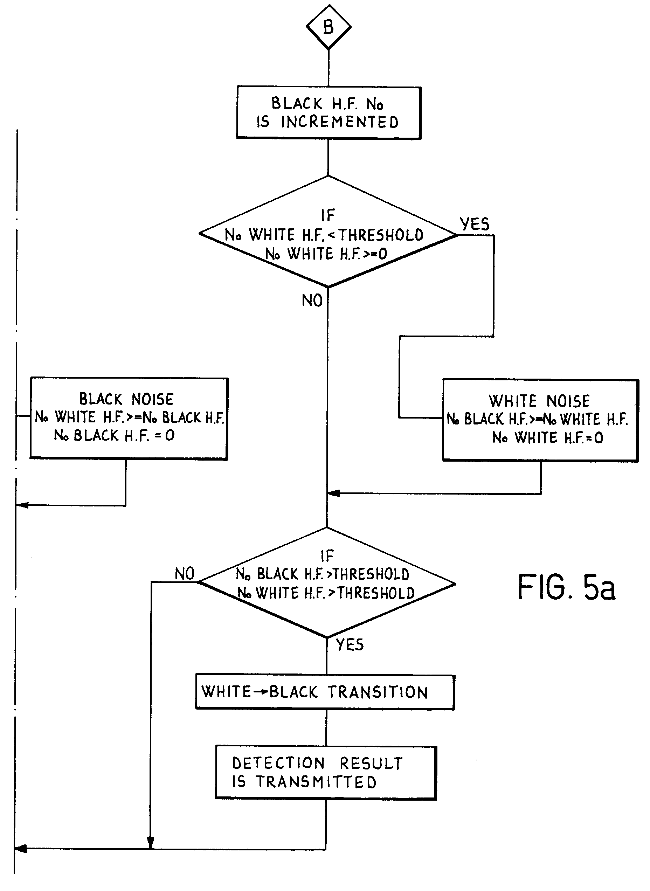

As far as more detailedly the main program is concerned, the information relating to each half frame (audio valve, black line level, total value of the half frame and of each individual line) is managed by a double buffer mechanism, for even half frames and for odd half frames, respectively, and is available when each half frame is complete. The processing unit, along the flow chart of Figure 5, decides whether the current half frame is to be considered as a "black" half frame or not.

It should be appreciated that the concepts of "black" and "white" are broadly related to the energy contents of both the audio and the video signals, rather than to the visual perception of the human observer. Consequently, for the purposes of this invention, all half frames of low energy contents will be referred to as "black" and all remaining half frames will be referred to as "white".

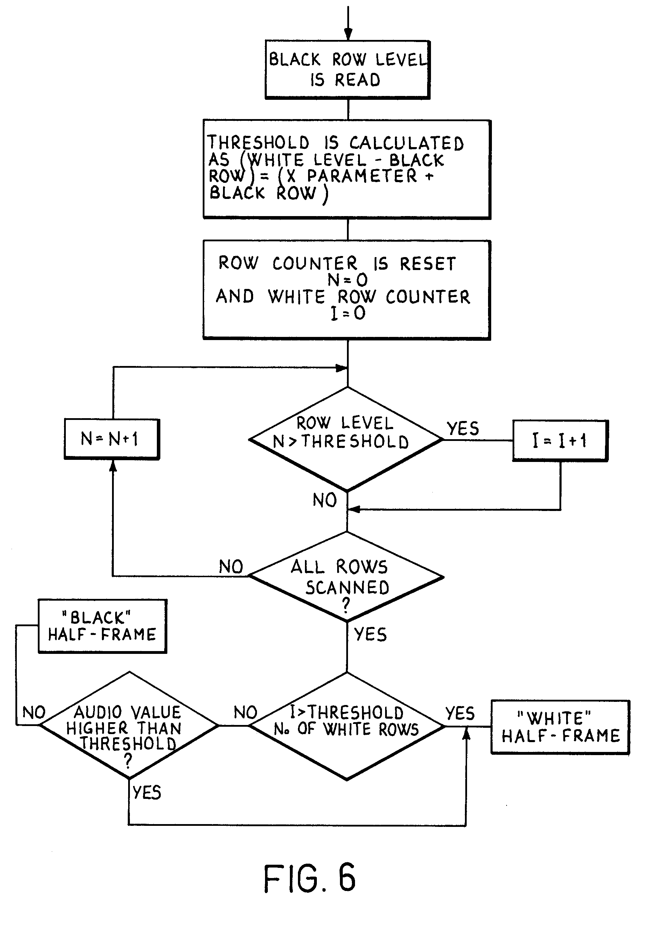

The discrimination algorithm between "white" half frames and "black" half frames is shown in Figure 6. By referring to Figure 6, which is perfectly comprehensible to any skilled in the art, it can be observed that, when reference is made to the value of the black line or of the black lines, if they are more than one, that are compared (it should be noted that the initial and final black lines are concerned, namely the lines that are always black, unless they are utilized for special purposes, such as the so-called televideo transmission or like) and when reference is made to the maximum dynamic variation of the signal (namely to the white level), a percentage value parametrically presettable over the level imposed by the black line is calculated, so as to establish a threshold level.

As a subsequent step, the lines whose energy level exceeds this threshold value and which, therefore, are considered as white lines are counted. When, upon termination of the half frame, the number of the lines considered as white exceeds a preset minimum threshold number, the concerned half frame is considered as "white", provided that, however, also its audio level exceeds a presettable audio threshold level. Should such audio level not exceed the threshold value, then the concerned half frame is considered as "black".

As an alternative method, a second operation mode is activated wherein the average luminosity level of the whole frame is controlled, by exploiting again the above explained procedure. The two above discussed analysis methods can also be conveniently utilized in cascade.

Upon obtaining the required information in respect of a single half frame, a subsequent step is to analyze the half frame sequences, by introducing the "noise" concept and keeping in mind that the conclusive object of this analysis is to locate or detect the transitions from a black half frame to a white half frame - thereby obtaining an indication of the begin of a transmission event - and the transitions from a white half frame to a black half frame - thereby obtaining an indication of the end of a transmission event. The "noise" concept is based upon the consideration that a "black" sequence can be defined as such only when it is comprised of a series of successive black half frames and analogously the same consideration applies to a "white" sequence. Anyway, a sequence of frames of the same colour (black or white) can be considered as such only when the number thereof exceeds a preset threshold value. Otherwise it is considered as "noise" and it is counted as a prosecution of the preceding sequence. When the analysis of the sequences is performed in this manner, by referring to Figure 5, it is possible to locate the transition times from "white" to "black" and viceversa. The above mentioned transitions designate, as concerns the black/white transitions, the begin of the event being processed and its subsequent evaluations and, as concerns the white/black transitions, the end of such event, respectively. When the location of the event or in other words its separation is thus complete, which is the purpose of this invention, a subsequent step provides for sending it to the parameter extractor or acquirer and for its "historical storage" in a buffer memory, under command from a serial line.

As far as the secundary program is concerned, as above mentioned, it does not perform functions connected with the analysis of the signals, but it only performs management functions in respect of the interface circuits. In fact it should construe all commands coming from serial line RS232 and comprising both data transferring functions and parameter up-dating functions, in addition, of course, to diagnostic functions.

A further task of the above outlined management secundary program is to up-date the internal clock and to up-date the hour image.

Summarizing all the above explanations, the separation function of portion of a television signal as received is performed by utilizing various events of the television transmission and in particular the presence of half frames having a low energy content and for this reason defined as "black" half frames, in contrast with half frames having a energy content higher than a pre-established value and for this reason defined as "white" half frames.

Based upon this definition, two methods for locating the black half frames can be designed: a first method, based upon consideration of the average energy value of the whole half frame, obtained by summing the amplitudes of all pixels of the half frame comprised within the Region of Visual Interest, and a second method, based upon consideration of the average energy level of the individual lines comprised within the concerned half frame, aiming at locating at least a minimum number of lines having an energy level higher than a pre-established value.

As it can be appreciated, these two methods entail a progressive improvement of the capability to locate "white" objects of small dimensions. Anyway, as far as particularly the second method is concerned, it can be realized that a white object vertically arranged and having a small width will hardly be located as such, due to the fact that it will be "averaged" over the individual lines.

A third method, therefore, can be conceived, based upon observation of the individual pixels by which a half frame is formed, rather than upon evaluation of the average values of the half frame or of the lines thereof. By this method, a given half frame will be defined as "white" even if it has a low energy content, provided that at least a number of pixels by which it is formed have an energy level higher than a pre-established value.

A half frame, therefore, will be considered as a surface the local heigth of which is represented by a luminosity value (as in a relief geographical map) and is sectioned by a horizontal section plane positioned at a presettable height. If, as a consequence of this operation, the greater portion of the concerned surface finds itself under the above designated plane, the relevant half frame will be defined as "black", in the contrary case, it will be defined as "white". It should be appreciated that, as already previously explained, also other events of the television transmission are utilized in the present invention to definitively define a "white" or a "black" half frame.

The concept of "local heigth" previously described can conveniently be exploited in various manners. For instance, it will be clear that the possibility is given to enlarge the principle to utilize two or more points (pixels) of this surface in order to establish suitable relationships adapted to locate objects of small dimensions. Lastly, a number of reference or horizontal section planes can be utilized thereby completely abandoning in effect the concept of "white" and "black" half frames.

In a different embodiment of this invention, therefore, the following three different parameters are exploited:
- in a first approach, the heigth of the individual pixels is considered, in order to count all pixels having a luminosity level exceeding a pre-established threshold value;
- in a second approach, the luminosity levels of a number of successive pixels (which will be hereinafter designated as block of pixels) are considered in order to eliminate the effects of "local" or "punctual" defects of the television image;
- in a third approach, two successive pixels are considered, by evaluating the absolute value of the difference therebetween. This operation is aimed at locating the derivative of the television signal, in order to analyze the luminosity rate.

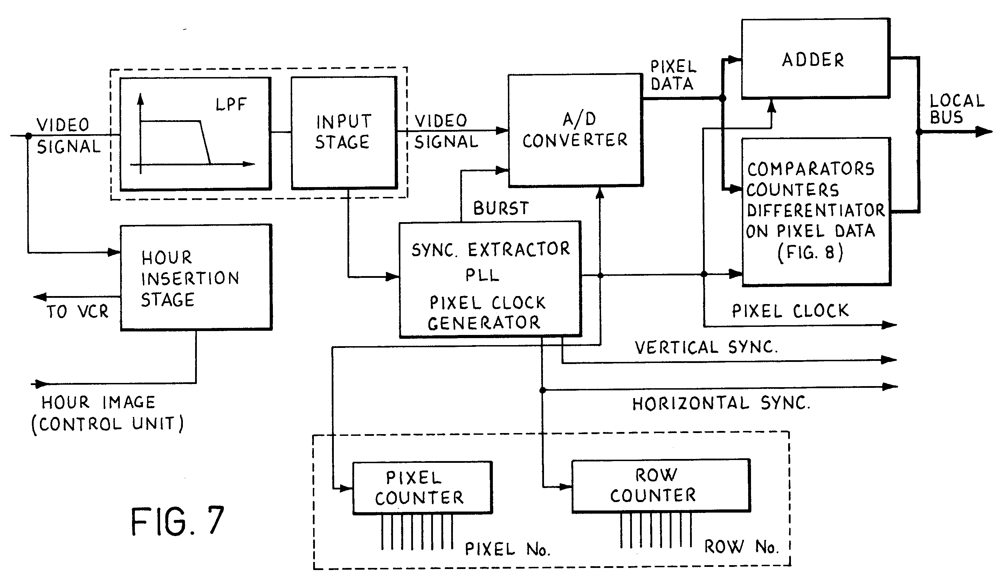

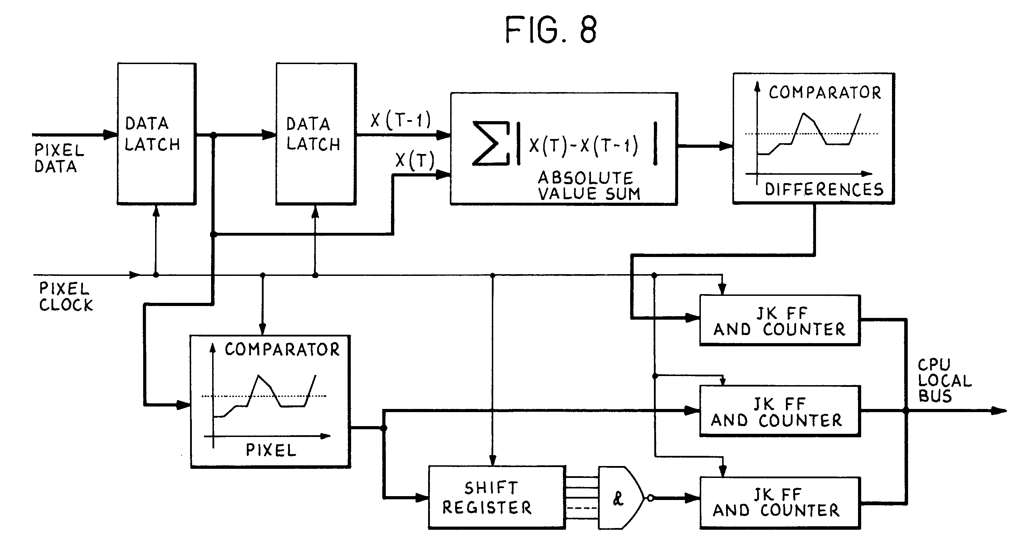

The circuit implementation of this embodiment will now be described by referring to Figures 7 and 8 of the annexed drawings. As it can be observed in Figure 7, the block by which the above explained method is carried out can suitably be inserted at the output of the analog/digital converter block and in parallel to the adder (summer) block.

The numerical (digitalized) values of the television signal output from the analog/digital converter are sent through a data latch circuit to a comparator circuit which is clocked by said pixel clock signal and controls a first JK flip-flop circuit into toggle configuration. At its output, therefore, a signal adapted to drive a digital counter will be available. The output of the same comparator circuit is also coupled to a shift register circuit, which is clocked by the same above mentioned pixel clock signal. Only when all of the outputs of the shift register are active, which means that only when pixels amenable to be defined as "bright" or "luminous" have been counted, a second JK flip-flop circuit is switched and in turn it drives a second counter. Aiming at performing this function, an AND gate is interposed between the shift register circuit and the JK flip-flop circuit.

Lastly, the output of the analog/digital converter circuit is coupled to a register (data latch) for it to be stored until the subsequent pixel clock pulse. The value of the present pixel and the value of the preceding one are then applied to a logic block (absolute value adder) that calculates the absolute value of the difference therebetween. The numeric or digital value so obtained is sent to a digital comparator circuit the output of which drives a block including a third JK flip-flop circuit and a third digital counter, quite analogous to the previously mentioned ones.

The above described circuit, of course, operates based upon a suitable program under management of a control unit which periodically (for instance, in coincidence with the frame synchro signals) operates by performing a read operation and then a clear operation of all counters. It is possible to establish a numerical threshold value for each of said comparator circuits and digital counter circuits and, taking it as a base, the processing unit of the separator apparatus performs the functions to decide whether the just completed half frame is to be considered as a "white" or a "black" half frame, according to the above set forth concepts.

The preferred embodiments of this invention have been heretofore described, but it should be understood that those skilled in the art, in addition to making changes and modifications to the above described constructions, can also implement them according to known circuit technologies and can utilize available commercial components, without departing from the spirit and from the scope of this invention.

## Claims

1. A system for interception and separation of portions of a television signal aimed at performing the automatic acknowledgement of television transmissions, in particular publicity advertisements (spots) characterized in that it substantially comprises:
- an apparatus for separation or extraction of programs adapted to locate the initial portion of each new program and to start consequently an apparatus for analysing and acknowledging the concerned program;
- an apparatus for acknowledgement of programs, capable to determine whether the concerned analyzed program belongs to the assembly of all possible programs of interest (spots);
- a system for recording the audio and video parameters of the programs of interest as acknowledged;
- a man-machine interfacing system possibly having a multi-user capability, in order to enable new programs of interest not yet included in the memory to be selected and labeled, even contemporaneously by a number of operators.

2. A system for automatic acknowledgement of television transmissions according to claim 1, characterized in that said separator apparatus structurally comprises a combination of four functional blocks:
a) a base band video signal processing block; b) an audio signal processing block; c) an analysis and control unit; d) an interface unit in respect of a cassette video recorder (CVR) and of the parameter extraction section of the acknowledgement apparatus (Figure 1).

3. A system for automatic acknowledgement of television transmissions according to claim 2, characterized in that said base band video signal processing block comprises in combination:
i) an input stage with associated low pass filter (LPF); ii) a time (hour) insertion stage; iii) a block for extracting the synchronization signals from the television signals and for regenerating the pixel clock signal; iv) an analog/digital converter stage; v) a pixel and line counter; and vi) a line adder (cumulator).

4. A system for automatic acknowledgement of television transmissions according to claim 2, characterized in that said audio signal processing block substantially comprises an input stage and an active filter operating as a band limiter, amplifier and impedance matching circuit, followed by an analog/digital converter for digital conversion of the audio signal levels and for their transfer to and analysis by said control unit.

5. A system for automatic acknowledgement of television transmissions according to claim 2, characterized in that said control and analysis unit comprises the combination of the following essential components:
- a microprocessor central unit with associated data and program memory;
- a real time clock circuit, with day and year indicator and a circuit to generate the time (hour) image;
- a circuit for generating the Regions of Visual Interest and for positioning the time image;
- a circuit for management of the line and frame synchronization signals, of the time information as well as of two serial lines RS232 and RS485, one of which is designed for connection with the computer of the data acquisition system and the other one is designed in order to enable the synchronization of the hour indication.

6. A system for automatic acknowledgement of television transmissions according to claim 2, characterized in that said interface section in respect of the VCR recorder and of the parameter extractor transmits the information to all channels forming the whole apparatus by means of microrelays.

7. A system for automatic acknowledgement of television transmissions according to claim 2, characterized in that said low-pass filter (LPF) attenuates the chrominance component of said video signal and said input stage substantially consists of a buffer amplifier stage.

8. A system for automatic acknowledgement of television transmissions according to claim 3, characterized in that said hour insertion stage receives from said control unit the hour image, synchronized with said video signal, said hour image being added to the television signal and sent to said recording unit (VCR).

9. A system for automatic acknowledgement of television transmissions according to claim 3, characterized in that said pixel clock regeneration circuit is a PLL (Phase Locked Loop) circuit.

10. A system for automatic acknowledgement of television transmissions according to claim 3, characterized in that said pixel clock regeneration circuit is a quartz oscillator circuit.

11. A system for automatic acknowledgement of television transmissions according to claim 9, characterized in that said PLL circuit generates the pixel clock sampling frequency for said A/D converter circuit and for all other functions connected with the video signal, by taking the line frequency as a reference frequency.

12. A system for automatic acknowledgement of television transmissions according to claim 3, characterized in that said analog/digital converter circuit is controlled by the chrominance under-carrier synchronization signal (burst) furnished by the line and frame synchronization signal extraction circuit.

13. A system for automatic acknowledgement of television transmissions according to claim 3, characterized in that said pixel counter is connected to the output of the pixel clock signal and said line counter is connected to the line synchronization signal output of the synchronization signal extraction and pixel clock signal regeneration block.

14. A system for automatic acknowledgement of television transmissions according to claims 3 and 12, characterized in that said adder circuit is connected to said A/D converter circuit so as to receive the pixel data therefrom, it performs an addition operation of the individuel pixel values of each line in order to calculate the average energy value of the same, it is connected to the control unit and transmits thereto the average numerical values calculated for each line in coincidance with the line synchronization signals, such values being analyzed (added) therein at the end of each half frame (frame synchronization signal).

15. A system for automatic acknowledgement of television transmissions according to claims 1 and 2, characterized in that said control and analysis unit (Figure 1) is clocked by the frame or vertical synchronization signals and said line adder block is clocked by the line or horizontal synchronization signal.

16. A system for automatic acknowledgement of television transmissions according to claim 5, characterized in that said local clock (RTC) and calendar stage generates the time information under direct management by the Central Processing Unit CPU and is associated to a hour image generating stage, the output of which is directly coupled to the hour insertion stage.

17. A system for automatic acknowledgement of television transmissions according to claim 16, characterized in that said local clock (RTC) and calendar stage is adapted to operate both as a master and as a slave member, in that it can be used as a reference generator to synchronize other functions.

18. A system for automatic acknowledgement of television transmissions according to claim 5, characterized in that said visual Region-Of-Interest generator stage is driven by said line and pixel counters as well as by said pixel clock signal, in order to divide the whole image into smaller regions containing a small number of pixels, which regions are activated by said control unit for analysis purposes, by means of a map memory, wherein each bit corresponds to one of these small visual regions.

19. A system for automatic acknowledgement of television transmissions according to claim 5, characterized in that, by means of said synchronization signal and time information managing block, that is connected to said central control unit, the line synchronization signal starts the read operation of the line adders both of said video signal processing section and of said audio signal processing section; the frame synchronization signal starts the half frame analysis procedure; the Real Time Clock (RTC) interrupt causes the hour indacation to be up-dated at each second and both serial interfaces (RS232 and RS485) are managed in interrupt mode.

20. A system for automatic acknowledgement of television transmissions according to claim 19, characterized in that it further comprises a system timer which is managed in interrupt mode and is designed to detect all those situations wherein the video signal is absent or is too weak (lack of carrier).

21. A system for automatic acknowledgement of television transmissions according to claim 1, characterized in that said acknowledgement apparatus includes an audio acknowledgement section, based upon acoustical type information, and a video acknowledgement section, which analyzes the video information contained in the video image.

22. A system for automatic acknowledgement of television transmissions according to claim 1, characterized in that said audio and video parameter recording system for all programs of interest has a large storage capability and a high processing speed, so that it can be utilized in real time by said acknowledgement apparatus.

23. A system for automatic acknowledgement of television transmissions according to claim 21, characterized in that each of said audio and video sections includes `a parameter acquisition section, which substantially performs a digitalization of the analog signal received based upon a suitable algorithm for the parametric representation of the signals, and an acknowledegement section, which performs a comparation between the received signal in parametric form and all already stored records.

24. A system for automatic acknowledgement of television transmissions according to claim 2, characterized in that said base band video signal processing block comprises in combination:
i) an input stage with associated low pass filter (LPF); ii) a time (hour) insertion stage; iii) a block for extracting the synchronization signals from the television signals and for regenerating the pixel clock signal; iv) an analog/digital converter stage; v) a pixel and line counter; and vi) a line adder (cumulator) having in parallel vii) a comparator, counter, an pixer differentiator stage for punctual analysis of the video signal.

25. A system for automatic acknowledgement of television transmissions according to claim 24, characterized in that said stage for punctual analysis of the video signal comprises: a first data latch circuit to the output of which a pixel comparator driven by the pixel clock signal is connected, arranged so as to control a first JK flip-flop circuit followed by a digital counter, the output of said comparator being also coupled to a shift register circuit having its outputs combined in AND function and coupled to a second flip-flop circuit followed by a second digital counter; an absolute value adder circuit connected to said first data latch circuit both by means of a direct connection an by means of an intermediary second data latch circuit, in order to calculate the difference between absolute values of consecutive pixels; the output of said absolute value adder circuit being coupled to a second comparator circuit for comparing said difference to a pre-established value, which drives a third JK flip-flop circuit followed by a third digital counter, the outputs of said first, second and third digital counters being altogether connected to the CPU local bus.

26. A system for automatic acknowledgement of television transmissions according to claims 24 and 25, characterized in that all said comparator, register, data latch, flip-flop and digital counter circuits are clocked by said pixel clock signal.
